(19) Europäisches Patentamt
European Patent Office
Office européen des brevets

(11) **EP 3 495 109 A1**

(12) **DEMANDE DE BREVET EUROPEEN**

(43) Date de publication:
**12.06.2019 Bulletin 2019/24**

(51) Int Cl.:
***B29C 43/00*** *(2006.01)*

(21) Numéro de dépôt: **18209616.4**

(22) Date de dépôt: **30.11.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **06.12.2017 FR 1761718**

(71) Demandeur: **Commissariat à l'Energie Atomique et aux Energies Alternatives**
**75015 Paris (FR)**

(72) Inventeurs:
• **DELLEA, Olivier**
**38054 GRENOBLE Cedex 09 (FR)**
• **FUGIER, Pascal**
**38054 GRENOBLE Cedex 09 (FR)**
• **LEBAIGUE, Olivier**
**38054 GRENOBLE Cedex 09 (FR)**
• **PONCELET, Olivier**
**38054 GRENOBLE Cedex 09 (FR)**

(74) Mandataire: **Nony**
**11 rue Saint-Georges**
**75009 Paris (FR)**

(54) **MATERIAU COMPOSITE POUR LA PREHENSION D'OBJETS A HAUTE TEMPERATURE**

(57) La présente invention concerne un matériau composite adapté pour une mise en contact avec un ou des objet(s) ayant une température supérieure ou égale à 250°C, notamment à des fins de préhension et/ou façonnage, caractérisé en ce qu'il est formé à partir de particules de bronze, de cellulose et d'au moins un polymère thermoplastique.

Elle concerne également un procédé de fabrication d'un tel matériau composite, un article moulé caractérisé en ce qu'il est formé, en tout ou partie, d'un matériau composite et un outil pour la préhension ou la manutention d'un objet ayant une température supérieure ou égale à 250°C, ledit outil comportant un matériau composite ou un article moulé selon l'invention.

**Description**

La présente invention concerne la manutention d'objets formés à chaud, et plus particulièrement la manipulation de la verrerie à chaud et vise notamment à proposer un nouveau matériau efficace pour la préhension et/ou le façonnage d'objets à haute température.

Dans la fabrication de la verrerie par des procédé automatiques, le verre fondu est mis en forme sur des chaines de production fonctionnant en continu et les articles verriers ainsi formés sont distribués, alors qu'ils sont encore à température très élevée, sur des convoyeurs pour les acheminer rapidement (à une vitesse de plusieurs m/s) vers les zones de finition et de stockage. Sur ce trajet, des systèmes rotatifs (carrousel) ayant des dispositifs à pinces en périphérie saisissent ces articles chauds (250-550°C) pour les distribuer sur les différentes lignes de fabrication de l'usine.

L'extrémité des pinces au contact du verre est donc exposée à des conditions extrêmement agressives qui sont de trois types :

- Chocs mécaniques, lorsque l'article arrive au contact de la pince avec une vitesse de plusieurs m/s. et qui engendre un facteur d'usure important pour la pince en considérant que 55 à 140 articles sont saisis par minute,
- Chocs thermiques, lorsque l'extrémité de la pince entre en contact avec un article verrier porté à une température de 400 à 500°C et ceci de manière continue et.
- Agression physico-chimique compte-tenu du caractère particulièrement oxydant de la surface du verre chaud et du temps de contact, de l'ordre de 3 à 7s, de l'extrémité de la pince avec cette surface.

Il a donc été nécessaire de développer des matériaux pouvant permettre la manipulation de la verrerie à chaud, à toutes les températures allant jusqu'aux plus élevées selon l'usage général (normalement pas plus de 700°C), sans provoquer de choc thermique au produit ni endommager la surface du verre, ou permettre la manipulation d'autres produits formés à chaud qui exigent des matériaux de manipulation résistant thermiquement et qui ne marquent pas le produit.

Idéalement, un tel matériau se doit d'être thermiquement stable, résistant au choc et stress thermique, résistant au pouvoir oxydant du verre, être non ou faiblement poreux pour s'affranchir de risque de contamination, et posséder une faible conductivité thermique ainsi qu'un haut degré de ténacité (H. M. Bishop, Development of Materials for Handling Hot Glass, Thesis L3898, univ. of Newcastle Upon Tyne, 1991).

Toutefois, les matériaux composites actuellement considérés comme consommables pour les chaines de production d'emballages verriers ne permettent pas de satisfaire à l'ensemble de ces exigences.

A titre illustratif des matériaux actuellement disponibles pour cet usage peuvent être notamment cités les composites à base de polyimide chargé en graphite à l'image notamment des produits Cerberite® et Tecasint, voire complémenté en fibres de carbone comme par exemple les produits commerciaux Vespel® SP-22 et Vespel® SCP-5050, les composites carbone/fibre de carbone comme par exemple les produits T26-HDP et Isofral, les composite époxy/fibres de verre comme en particulier l'Isofral GFE, les composites vitrocéramiques tels que par exemple le produit Tactylit et tout particulièrement les composites bronze (75% vol.)/téflon.

Les composites bronze/téflon sont à ce jour les matériaux privilégiés pour la constitution des inserts de roue de transfert au contact des pièces de verre chaudes (400°C-800°C). Malheureusement, ce type de matériau pose à terme un problème sanitaire dans la mesure où, à l'usage, ils génèrent des vapeurs toxiques lorsqu'ils sont chauffés à haute température. La décomposition thermique du téflon qui finit par se produire génère des composés volatiles fluorés ($CH_2F$, $CF_2$, HF, ...).

La présente invention a précisément pour objet de proposer un nouveau matériau dénué de cet effet indésirable tout en étant doté des autres performances attendues.

Ainsi, selon un premier objet, la présente invention concerne un matériau composite adapté pour une mise en contact, avec un ou des objet(s) ayant une température supérieure ou égale à 250°C, caractérisé en ce qu'il est formé à partir de particules de bronze, de cellulose et d'au moins un polymère thermoplastique.

Avantageusement, le matériau composite selon l'invention est dénué de téflon.

Un tel matériau composite est notamment dédié à la préhension et/ou au façonnage des objets ayant une température supérieure ou égale à 250°C.

De manière inattendue, les inventeurs ont en effet constaté qu'un matériau composite selon l'invention, et en particulier un insert constitué de ce matériau composite, mis en oeuvre dans une pince d'un système de préhension d'articles verrier à haute température, à savoir à des températures comprises entre 250°C et 550°C, en particulier entre 400°C et 500°C, de manière à être en contact avec l'article verrier lors de sa préhension, présentent une perte de matière très inférieure aux inserts préparés à partir de matériaux composites habituellement employés, lui conférant ainsi une durée de vie nettement supérieure et sont avantageusement sans risque sur le plan sanitaire car dénués de téflon.

Les matériaux composites selon l'invention s'avèrent donc particulièrement utiles dans des domaines tels que l'industrie verrière.

Selon un mode de réalisation, le polymère thermoplastique d'un matériau composite selon l'invention est choisi parmi les polyimides, les phénols, les polysulfones, le polysulfure de phénylène, les polybenzyoles, et leurs mélanges, et est tout particulièrement un polyimide.

Un matériau composite selon l'invention peut avantageusement être caractérisé en ce qu'il se présente sous la forme d'un produit ou article moulé.

Ainsi, un autre objet de la présente invention concerne un produit ou un article moulé caractérisé en ce qu'il est formé, en tout ou partie, de préférence en ce qu'il est constitué, i.e. est uniquement composé, d'un matériau composite selon l'invention.

Un autre objet de la présente invention est un procédé de fabrication d'un matériau composite selon l'invention.

Un tel procédé selon l'invention comporte les étapes suivantes :

a) disposer d'un mélange de particules de bronze, de cellulose et d'au moins un polymère thermoplastique ; et
b) imposer audit mélange une pression supérieure ou égale à 100 MPa et une température supérieure ou égale à 100°C de manière à former ledit matériau composite selon l'invention.

Selon un mode de réalisation, l'étape b) d'un procédé de fabrication selon l'invention est réalisée au sein d'un moule propice à l'obtention d'un matériau composite selon l'invention sous la forme d'un article moulé, en particulier d'un insert, notamment d'un insert dédié à une pince.

Enfin, un autre aspect de la présente invention concerne un outil, de préférence une pince, pour la préhension ou la manutention d'un objet, notamment un objet ayant une température supérieure ou égale à 250°C, ledit outil comportant au moins un mors de préhension, ledit mors de préhension :

(i) étant constitué d'un matériau composite selon l'invention ; ou
(ii) comportant au moins un article moulé, ledit au moins un article moulé étant disposé dans l'outil de sorte à entrer en contact avec l'objet à manipuler. Cet objet est préférentiellement un objet en verre.

Comme il ressort du présent texte, et notamment des exemples ci-après, les matériaux composites selon l'invention, ainsi que les articles moulés ou produits obtenus à partir de ces matériaux composites selon l'invention, s'avèrent avantageux à plusieurs titres.

Ils sont résistants à la corrosion et à l'oxydation.

Ils sont aptes à la préhension, et par conséquent à la mise en contact, d'objets, notamment d'objets en verre, ayant une température de l'ordre de 400°C à 500°C, pendant trois à sept secondes entre la phase de chargement et de déchargement dudit objet, sans le dégrader.

Comme indiqué précédemment, les matériaux composites et articles moulés ou produits selon l'invention s'avèrent en effet avoir des performances accrues dans leur durée de vie du fait d'une résistance à l'usure améliorée par rapport à d'autres matériaux composites habituellement utilisés ou à des articles moulés ou produits préparés à partir de ces autres matériaux composites habituellement utilisés.

Ils présentent également l'avantage d'être sans danger sur le plan sanitaire en ce qu'ils ne dégazent pas d'espèce nocive à haute température, comme c'est le cas pour certains matériaux actuellement utilisés et différents de la présente invention, tel que ceux comprenant du téflon.

Ils présentent par ailleurs une bonne résistance aux chocs mécaniques, lors par exemple de la réception d'objets à haute température mentionnés ci-dessus au niveau des convoyeurs destinés à les distribuer à une vitesse de plusieurs mètres par seconde vers les zones de finition et de stockage dans les chaines de production.

En outre, dans le cadre d'une utilisation dans la fabrication d'articles de verre, il est constaté une minimisation du choc thermique de refroidissement imposé au verre durant leur mise en contact avec des produits ou articles moulés selon l'invention présents sous forme d'inserts au niveau des pinces destinées à saisir les articles chauds. Comme la température de l'insert formé d'un matériau composite selon l'invention est plus faible que celle du verre, la baisse de température de la surface du verre liée au contact brutal avec l'insert entraine l'apparition d'un gradient thermique induisant un profil de contrainte. Les contraintes de tension à la surface du verre sont une source de microfissures.

L'ensemble de ces avantages permettent avantageusement de répondre à des problématiques thermo-tribo-mécaniques et chimiques (stress oxydant du verre) des inserts de roue de transfert rencontrées par l'homme du métier.

Matériau composite selon l'invention

Comme énoncé précédemment, le matériau composite selon l'invention est formé à partir d'au moins trois composants : des particules de bronze, de la cellulose et un polymère thermoplastique.

Selon un mode de réalisation préféré, un matériau composite selon l'invention est formé à plus de 90% en masse, notamment à plus de 95% en masse, en particulier à plus de 98% en masse, plus particulièrement à plus de 99% en masse, voire est constitué, i.e. uniquement composé, de particules de bronze, de cellulose et d'au moins un polymère thermoplastique.

Les propriétés de conductivité thermique d'un matériau composite selon l'invention peuvent notamment être modulées via la quantité de particules de bronze le constituant.

Selon un mode de réalisation, un matériau composite selon l'invention possède une conductivité thermique comprise entre 3 et 10 W.m$^{-1}$.K$^{-1}$, et de préférence comprise entre 4 et 5 W.m$^{-1}$.K$^{-1}$.

La conductivité thermique $\lambda$ (ou TC) donne la capacité d'un matériau à dissiper la chaleur. La loi de Fourier dans un solide s'écrit :

$$\vec{\varphi} = -\lambda \cdot \overrightarrow{gradT}$$

le flux de chaleur $\varphi$ étant proportionnel à la conductivité thermique $\lambda$ et au gradient de température. L'unité de la conductivité thermique est, comme indiqué ci-dessus, le W.m$^{-1}$.K$^{-1}$.

La conductivité thermique d'un matériau selon l'invention peut être mesurée selon différents principes bien connus de l'homme du métier. En effet, de nombreux principes de mesure de conductivité thermique existent, que l'on peut classer dans deux catégories : les méthodes en régime permanent (dont celle dite de « plaque chaude gardée », selon la norme ISO 8302) et les méthodes en régime transitoire où l'analyse dynamique d'une montée en température provoquée par un élément chauffant permet de calculer la diffusivité thermique, la capacité thermique massique et la conductivité thermique.

Ce matériau composite est adapté à une mise en contact avec des objets possédant une température très élevée. Il est donc également thermorésistant.

Avantageusement, il se présente sous la forme d'un objet moulé.

Pour se faire, il est avantageusement formé par compression thermique de l'ensemble de ces constituants au sein d'un moule façonné aux dimensions et forme de l'article recherché par exemple d'un mors de préhension comme un insert.

Particules de bronze

Les particules de bronze constituent l'un des composants obligatoires d'un matériau composite de l'invention. Elles contribuent à la conductivité thermique du matériau composite selon l'invention.

Selon un mode de réalisation, ces particules sont notamment présentes dans le matériau composite en une teneur d'au moins 70% en masse par rapport à la masse totale du matériau composite.

En particulier, ces particules peuvent notamment être présentes dans le matériau composite en une teneur comprise entre 77% et 83% en masse par rapport à la masse totale du matériau composite, et peuvent plus particulièrement être présentes dans le matériau composite en une teneur comprise entre 78% et 82% en masse par rapport à la masse totale du matériau composite.

Selon un mode de réalisation préféré, un matériau de l'invention comprend 80% en masse de particules de bronze par rapport à la masse totale du matériau composite.

Selon un mode de réalisation, les particules de bronze mises en oeuvre pour la préparation d'un matériau composite selon l'invention ont un diamètre compris entre 10 et 100 micromètres, de préférence entre 20 et 50 micromètres, plus particulièrement entre 30 et 40 micromètres.

Selon la pression et la température imposée lors de la fabrication d'un matériau composite selon l'invention, le diamètre des particules de bronze dans un matériau composite selon l'invention est en particulier compris entre 10 et 100 micromètres, de préférence entre 20 et 50 micromètres, plus particulièrement entre 30 et 40 micromètres.

Selon la présente invention, on entend par « diamètre » des particules la dimension la plus grande mesurée sur une section transversale de la particule.

Les particules de bronze selon l'invention peuvent être sphériques, non-sphériques (allongées) ou un mélange de ces deux formes.

A titre illustratif, des particules de bronze présentent dans le commerce qui peuvent être utilisées dans un matériau composite de l'invention sont celles commercialisées par la société ECKA Granules.

Cellulose

La cellulose constitue l'un des autres composants obligatoires d'un matériau composite de l'invention.

Elle intervient notamment à titre d'élément réducteur au regard du stress oxydant présent en surface du verre chaud entrant en contact avec un matériau composite de l'invention ; et contribue à la formation d'une couche carbonée en surface du matériau composite.

La cellulose est une macromolécule formée de cycles enchaînés linéairement, les différentes chaînes placées côte à côte sont liées par de nombreuses liaisons hydrogènes qui donne à ce matériau composite une très grande rigidité.

Selon un mode de réalisation, un matériau composite de l'invention comprend une teneur en cellulose d'au moins 5% en masse par rapport à la masse totale du matériau composite, et de préférence d'au moins 8% en masse par rapport à la masse totale du matériau composite.

En particulier, la cellulose est notamment présente dans le matériau composite en une teneur comprise entre 7% et 13% en masse par rapport à la masse totale du matériau composite, et notamment présente dans le matériau composite en une teneur comprise entre 8% et 12% en masse par rapport à la masse totale du matériau composite.

Selon un mode de réalisation préféré, un matériau composite de l'invention comprend 10% en masse de cellulose par rapport à la masse totale du matériau composite.

A titre illustratif, de la cellulose présente dans le commerce qui peut être utilisée dans un matériau composite selon l'invention est le produit commercialisé par la société Technocel.

Polymère thermoplastique

Le polymère thermoplastique constitue le troisième composant obligatoire d'un matériau composite de l'invention.

Au sens de l'invention, la qualification de thermoplastique caractérise la capacité de ce polymère à se ramollir d'une façon répétée lorsqu'il est chauffé au-dessus d'une certaine température, mais qui, au-dessous, redevient dure.

Le polymère thermoplastique contribue notamment à la cohésion du matériau composite selon l'invention.

Ce polymère thermoplastique composant un matériau composite de l'invention peut être choisi parmi les polyimides, les phénols, les polysulfones, le polysulfure de phénylène, les polybenzyoles et leurs mélanges.

Selon un mode de réalisation préféré, le polymère thermoplastique est un polyimide, notamment un polyimide ayant un poids moléculaire compris entre 75000 g/mol et 175000 g/mol, notamment compris entre 100000 g/mol et 175000 g/mol, et de préférence compris entre 150000 g/mol et 170000 g/mol.

A titre illustratif, un polyimide présent dans le commerce qui peut être utilisé dans un matériau composite selon l'invention est le produit commercialisé par la société UBE industrie.

Selon un mode de réalisation, un matériau composite de l'invention comprend une teneur en polymère thermoplastique d'au moins 5% en masse par rapport à la masse totale du matériau composite, et de préférence d'au moins 8% en masse par rapport à la masse totale du matériau composite.

En particulier, le polymère thermoplastique est notamment présent dans le matériau composite selon l'invention en une teneur comprise entre 7% et 13 % en masse par rapport à la masse totale du matériau composite, et notamment présent dans le matériau composite en une teneur comprise entre 8% et 12% en masse par rapport à la masse totale du matériau composite.

Selon un mode de réalisation préféré, un matériau composite de l'invention comprend 10% en masse de polymère thermoplastique par rapport à la masse totale du matériau composite.

Comme énoncé précédemment d'autres composés peuvent être également considérés conjointement. D'une manière générale, ce ou ces composés peuvent être choisis parmi les additifs usuellement considérés dans les matériaux composites déjà disponibles pour l'usage considéré selon l'invention. A titre illustratif, un tel additif peut de préférence être du polyméthacrylate de méthyle (PMMA).

Toutefois, selon un mode de réalisation préféré, un matériau composite de l'invention est formé à plus de 90% en masse, notamment à plus de 95% en masse, en particulier à plus de 98% en masse, plus particulièrement à plus de 99% en masse, voire est constitué, de particules de bronze, de cellulose et du polyimide.

Selon un mode de réalisation particulier, un matériau composite de l'invention consiste en 80 % en masse de particules de bronze, 10% en masse de cellulose et 10% en masse de polyimide, par rapport au poids total du matériau composite.

Procédé de fabrication

Un matériau composite selon l'invention est préparé à l'aide d'un procédé de fabrication comportant les étapes suivantes :

a) disposer d'un mélange de particules de bronze, de cellulose et d'au moins un polymère thermoplastique ; et
b) imposer audit mélange une pression supérieure ou égale à 100 MPa et une température supérieure ou égale à 100°C de manière à former ledit matériau composite.

A titre illustratif, la mise sous pression d'un mélange selon l'étape a) dudit procédé peut être réalisée à l'aide d'une presse, notamment d'une presse uniaxe.

Par ailleurs, à titre illustratif également, la mise sous température d'un mélange selon l'étape a) dudit procédé peut être réalisée par l'utilisation d'un récipient chauffant, en particulier d'un moule chauffant.

Selon un mode de réalisation, l'étape b) d'un procédé de fabrication selon l'invention est réalisée au sein d'un moule propice à l'obtention du matériau composite sous la forme d'un article moulé notamment tel que défini ci-après.

Selon un mode de réalisation, la pression mise en oeuvre à l'étape b) d'un procédé selon l'invention est comprise entre 100 MPa et 60000 MPa, en particulier entre 100 MPa et 10000 MPa, notamment entre 100 MPa et 5000 MPa, de préférence entre 150 MPa et 1000 MPa, et est plus préférentiellement de 200 MPa.

Selon un mode de réalisation, la température mise en oeuvre à l'étape b) est comprise entre 100°C et 300°C, en particulier entre 100°C et 200°C, et est de préférence de 150°C.

Selon un mode de réalisation préféré, la température mise en oeuvre à l'étape b) est de 150°C et la pression mise en oeuvre à cette étape est de 200 MPa.

Selon un mode de réalisation, l'étape b) est réalisée pendant une durée comprise entre 1 et 10 minutes, en particulier entre 1 et 5 minutes, et de préférence de 2 minutes. En particulier, l'étape b) peut être réalisée pendant une durée continue comprise entre 1 et 10 minutes, en particulier entre 1 et 5 minutes, et de préférence de 2 minutes.

Selon un mode de réalisation préféré, la température mise en oeuvre à l'étape b) est de 150°C, la pression mise en oeuvre à cette étape est de 200 MPa, et l'étape est réalisée en continue pendant 2 minutes.

Le mélange de l'étape a) d'un procédé selon l'invention peut être réalisé directement dans l'enceinte et notamment dans le moule, ou être formé préalablement à la mise en oeuvre du procédé.

Article moulé selon l'invention

Comme indiqué précédemment, un matériau composite selon l'invention peut se présenter sous la forme d'un article moulé.

Par « article moulé » ou « produit », on entend au sens de l'invention un objet de forme tridimensionnelle (par opposition, par exemple, à un revêtement), qui peut être sous sa forme finale, c'est-à-dire sous une forme qui permet sa mise en oeuvre directe, ou sous une « préforme » qui doit être découpée ou usinée sous une forme finale.

Par « mise en oeuvre directe » d'un article moulé selon l'invention, on entend aussi bien son utilisation que son installation dans un outil selon l'invention.

Un article moulé selon l'invention se présentant sous la forme d'une « préforme » telle que décrite ci-dessus peut être découpée ou usinée en un seul ou en plusieurs article(s) moulé(s) selon l'invention sous une forme finale. Dans le cas où plusieurs articles moulés selon l'invention, sous une forme finale, sont obtenus après découpage ou usinage d'un article moulé de l'invention, la forme finale desdits articles moulés peut être indépendamment identique ou différente.

Ainsi, la présente invention concerne également un article moulé ou encore produit dédié à être mis en contact avec des objets à haute température, notamment avec des objets ayant une température supérieure ou égale à 250°C, caractérisé en ce qu'il est formé, en tout ou partie, et de préférence est constitué, d'un matériau composite selon l'invention.

Selon un mode de réalisation préféré, un article moulé selon l'invention est formé à plus de 90% en masse, notamment à plus de 95% en masse, en particulier à plus de 98% en masse, plus particulièrement à plus de 99% en masse, voire est constitué, i.e. est uniquement composé, d'un matériau composite conforme à l'invention.

Un article moulé ou produit selon l'invention peut être de forme et de taille variées.

Selon un mode de réalisation, un article moulé selon l'invention est un insert, notamment un insert dédié à être présent dans une pince.

Selon un autre mode de réalisation, un article moulé selon l'invention est un mors, en particulier le mors d'une pince.

Par ailleurs, la présente invention vise également un outil pour la préhension ou la manutention d'un objet, en particulier d'un objet en verre, ayant une température supérieure ou égale à 250°C, ledit outil comportant au moins un mors de préhension :

(i) étant constitué d'un matériau composite selon l'invention ; ou
(ii) comportant au moins un article moulé selon l'invention, ledit au moins un article moulé étant disposé dans l'outil de sorte à entrer en contact avec l'objet lors de la préhension dudit objet.

Selon un mode de réalisation, l'outil selon l'invention comprend au moins deux mors de préhension, chacun de ces deux mors, indépendamment l'un de l'autre :

(i) étant constitué d'un matériau composite selon l'invention ; ou

(ii) comportant au moins un article moulé selon l'invention, ledit au moins un article moulé étant disposé dans l'outil de sorte à entrer en contact avec l'objet lors de la préhension dudit objet.

Selon un mode de réalisation préféré, lorsque qu'un outil selon l'invention comporte au moins un article moulé selon l'invention, ledit au moins un produit est disposé dans l'outil de sorte à ce que seul ledit au moins un article moulé entre en contact avec l'objet lors de la préhension dudit objet.

Selon un mode de réalisation, un mors d'un outil selon l'invention est constitué d'un matériau composite selon l'invention.

Selon un autre mode de réalisation, le mors d'un outil selon l'invention comprend un, deux, trois, quatre, cinq ou plus article moulé selon l'invention.

Lorsque le mors d'un outil selon l'invention comprend plus d'un article moulé selon l'invention, les articles moulés peuvent avoir des dimensions identiques ou différentes indépendamment les uns des autres.

Lorsque le mors d'un outil selon l'invention comprend plus d'un article moulé selon l'invention, les articles moulés peuvent indépendamment être en contact les uns avec les autres ou être disposés séparément les uns des autres.

Selon un mode de réalisation préféré, lorsque le mors d'un outil selon l'invention comprend plus d'un article moulé selon l'invention, les articles moulés sont disposés de manière à tous être en contact avec l'objet lors de la préhension de l'objet.

Avantageusement, lorsque le mors d'un outil selon l'invention comprend plus d'un article moulé selon l'invention, lors de la préhension de l'objet par l'outil, l'objet rentre uniquement en contact avec les articles moulés.

Selon un mode de réalisation particulier, un outil selon l'invention est une pince, de préférence une pince comprenant au moins deux, en particulier seulement deux, mors tels que décrits ci-dessus.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

D'autres avantages et caractéristiques de l'invention ressortiront mieux à la lecture de la description détaillée d'exemples de mise en oeuvre de l'invention soumis à titre illustratif et non limitatif de l'invention.

## EXEMPLE 1 - Préparation d'inserts

Des inserts conformes à l'invention ont été préparés à partir d'un matériau composite cellulose/particules de bronze/polyimide selon l'invention.

Un mélange de 80% en masse de particules de bronze (commercialisées par la société Ecka granules sous le nom ECKA bronze 90/10 WS), 10% en masse de cellulose (commercialisée par la société Technocel sous le nom Technocel®) et 10% en masse de polyimide (commercialisée par la société UBE industrie ou Alfa Aesar sous le nom 43656 Polyimid resin (CAS62929-02-6)) par rapport au poids total du mélange) a été réalisé.

Pour l'opération de mise en forme, les essais ont été réalisés avec une presse uniaxe d'une capacité de 600 tonnes (Presse EKD 600/315 - ACB Loire) et d'un moule chauffant réalisé spécifiquement à la forme de l'insert souhaité.

Les informations relatives à la presse sont les suivantes :

- Presse d'amboutissage 6000kN en coulisseau, 3150kN en coussin ;
- Grandeurs instrumentées :

  ◦ Pressions hydrauliques du coulisseau ;
  ◦ Déplacement du coulisseau ;
  ◦ Pressions hydrauliques du coussin ;
  ◦ Déplacement du coussin ;

- Tablier de 1000 x 1200 mm ;
- Course coulisseau : 500 mm ;
- Ouverture max : 1000 mm ;
- Ejecteur coulisseau ;
- Vitesse travail coulisseau : 30 mm/s ;
- Plage de régulation : 1500 kN à 6000 kN.

La presse a été mise en oeuvre durant 2 minutes à une pression de 200 Pa et à une température de 150°C.

**EXEMPLE 2 - Mise en oeuvre des inserts sur une chaîne de production de verres d'emballage**

Des tests comparatifs ont été réalisés entre des pinces contenant un insert tel que préparé à l'exemple 1, et donc conforme à l'invention, et des pinces contenant un insert préparé à partir d'un matériau composite différent habituellement mis en oeuvre, i.e. un insert téflon/bronze.

Ces inserts ont ainsi été utilisés dans des pinces, au niveau de dispositifs de pinces présents en périphérie de systèmes rotatifs (carrousel) de chaînes de fabrication d'emballages en verre fonctionnant en continu, ces pinces saisissant des emballages en verre chauds (420°C) lorsque ces articles verriers sont distribués sur des convoyeurs pour les acheminer rapidement vers les zones de finition et de stockage.

Les mêmes conditions opératoires ont été appliquées aux deux types d'insert.

Après 15h de fonctionnement continue des chaines de fabrication, des mesures d'usure des inserts, à savoir des mesures de pertes de matière des inserts par mesure de l'épaisseur de l'insert, ont été réalisées et comparées aux mesures équivalentes effectuées avant utilisation de ces inserts.

Les résultats suivants ont été obtenus.

| Type d'insert | Mesure épaisseur de l'insert au centre (mm) | Mesure épaisseur de l'insert au bord gauche (mm) | Mesure épaisseur de l'insert au bord droit (mm) |
|---|---|---|---|
| Téflon/bronze (Comparatif) | 17,2 | 17,2 | 17,2 |
| Cellulose/bronze/polyimide (Conforme à l'invention) | 18,2 | 18,1 | 18,1 |

Il apparait une plus grande résistance à l'usure des inserts selon l'invention comparativement à un insert hors invention couramment utilisé et obtenu à partir d'un matériau composite différent de celui de la présente invention.

Par ailleurs, et contrairement à l'insert téflon/bronze, un insert selon l'invention n'a pas conduit à un dégazage d'espèce nocive lorsqu'il était chauffé à haute température.

**Revendications**

1.   Matériau composite adapté pour une mise en contact, avec un ou des objet(s) ayant une température supérieure ou égale à 250°C, notamment à des fins de préhension et/ou façonnage, **caractérisé en ce qu'**il est formé à partir de particules de bronze, de cellulose et d'au moins un polymère thermoplastique.

2.   Matériau composite selon la revendication 1, dans lequel le polymère thermoplastique est choisi parmi les polyimides, les phénols, les polysulfones, le polysulfure de phénylène, les polybenzyoles et leurs mélanges.

3.   Matériau composite selon la revendication 1 ou 2, dans lequel le polymère thermoplastique est un polyimide.

4.   Matériau composite selon l'une quelconque des revendications 1 à 3, comprenant une teneur en bronze d'au moins 70% en masse, de préférence comprise entre 77% et 83% en masse, et est plus préférentiellement de 80% en masse, par rapport à la masse totale du matériau composite.

5.   Matériau composite selon l'une quelconque des revendications 1 à 4, comprenant une teneur en cellulose d'au moins 5% en masse, de préférence comprise entre 7% et 13% en masse, et plus préférentiellement de 10% en masse, par rapport à la masse totale du matériau composite.

6.   Matériau composite selon l'une quelconque des revendications 1 à 5, comprenant une teneur en polymère thermoplastique d'au moins 5% en masse, de préférence comprise entre 7% et 13% en masse, et plus préférentiellement de 10% en masse, par rapport à la masse totale du matériau composite.

7.   Matériau composite selon l'une quelconque des revendications 1 à 6, **caractérisé en ce qu'**il est formé à plus de 90% en masse, notamment à plus de 95% en masse, en particulier à plus de 98% en masse, plus particulièrement à plus de 99% en masse, voire constitué, de particules de bronze, de cellulose et d'au moins un polymère thermoplastique.

8.   Matériau composite selon l'une quelconque des revendications 1 à 7, **caractérisé en ce qu'**il se présente sous la forme d'un article moulé.

9. Procédé de fabrication d'un matériau composite selon l'une quelconque des revendications 1 à 8, comportant les étapes suivantes :

a) disposer d'un mélange de particules de bronze, de cellulose et d'au moins un polymère thermoplastique ; et
b) imposer audit mélange une pression supérieure ou égale à 100 MPa et une température supérieure ou égale à 100°C de manière à former ledit matériau composite.

10. Procédé selon la revendication 9, dans lequel le polymère thermoplastique du mélange de l'étape a) est tel que défini en revendication 2 ou 3.

11. Procédé selon la revendication 9 ou 10, dans lequel la pression mise en oeuvre à l'étape b) est comprise entre 100 Mpa et 60000 MPa, en particulier entre 100 MPa et 10000 MPa, notamment entre 100 MPa et 5000 MPa, de préférence entre 150 MPa et 1000 MPa, et est plus préférentiellement de 200 MPa.

12. Procédé selon l'une quelconque des revendications 9 à 11, dans lequel la température mise en oeuvre à l'étape b) est comprise entre 100°C et 300°C, en particulier entre 100°C et 200°C, et est de préférence de 150°C.

13. Procédé selon l'une quelconque des revendications 9 à 12, dans lequel l'étape b) est réalisée pendant une durée continue comprise entre 1 et 10 minutes, en particulier entre 1 et 5 minutes, et de préférence de 2 minutes.

14. Procédé selon l'une quelconque des revendications 9 à 13, dans lequel l'étape b) est réalisée au sein d'un moule propice à l'obtention du matériau composite sous la forme d'un article moulé, en particulier d'un insert, notamment d'un insert dédié à une pince.

15. Article moulé **caractérisé en ce qu'**il est formé, en tout ou partie, d'un matériau composite tel que défini selon l'une quelconque des revendications 1 à 8.

16. Outil pour la préhension ou la manutention d'un objet, en particulier d'un objet en verre, ayant une température supérieure ou égale à 250°C, ledit outil comportant au moins un mors de préhension, ledit mors de préhension :

(i) étant constitué d'un matériau composite tel que défini dans l'une quelconque des revendications 1 à 8 ; ou
(ii) comportant au moins un article moulé tel que défini en revendication 15, ledit au moins un article moulé étant disposé dans l'outil de sorte à entrer en contact avec l'objet lors de la préhension dudit objet.

Europäisches Patentamt

European Patent Office

Office européen des brevets

# RAPPORT DE RECHERCHE EUROPEENNE

Numéro de la demande

EP 18 20 9616

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 105 820 546 A (LI HONGYU) 3 août 2016 (2016-08-03) * abstract, [0005] * ----- | 1-3 | INV. B29C43/00 |
| X | US 2008/090941 A1 (LIN JIIN-HUEY C [US] ET AL) 17 avril 2008 (2008-04-17) * [0002],[0152]ff: "Example 12" * ----- | 1-3 | |
| A | US 2012/048612 A1 (BUNYAN MICHAEL H [US] ET AL) 1 mars 2012 (2012-03-01) ----- | 1-16 | |
| A | US 2017/074829 A1 (MERTINS KAREN S [US] ET AL) 16 mars 2017 (2017-03-16) * le document en entier * ----- | 1-16 | |

**DOMAINES TECHNIQUES RECHERCHES (IPC)**

C03B
B29C

Le présent rapport a été établi pour toutes les revendications

| Lieu de la recherche | Date d'achèvement de la recherche | Examinateur |
|---|---|---|
| Munich | 18 décembre 2018 | Radeck, Stephanie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 18 20 9616

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-12-2018

| Document brevet cité au rapport de recherche | | Date de publication | Membre(s) de la famille de brevet(s) | | Date de publication |
|---|---|---|---|---|---|
| CN 105820546 | A | 03-08-2016 | AUCUN | | |
| US 2008090941 | A1 | 17-04-2008 | CN | 1796442 A | 05-07-2006 |
| | | | US | 2008090941 A1 | 17-04-2008 |
| | | | WO | 2006071846 A2 | 06-07-2006 |
| US 2012048612 | A1 | 01-03-2012 | BR | 112013004706 A2 | 10-05-2016 |
| | | | EP | 2612060 A1 | 10-07-2013 |
| | | | US | 2012048612 A1 | 01-03-2012 |
| | | | WO | 2012030641 A1 | 08-03-2012 |
| US 2017074829 | A1 | 16-03-2017 | AUCUN | | |

EPO FORM P0460

## RÉFÉRENCES CITÉES DANS LA DESCRIPTION

**Littérature non-brevet citée dans la description**

- Development of Materials for Handling Hot Glass. **H. M. BISHOP.** Thesis L3898. univ. of Newcastle Upon Tyne, 1991